# EUROPEAN PATENT SPECIFICATION

(11) **EP 0 457 341 B1**
(45) Date of publication and mention of the grant of the patent: **10.08.1994**
(21) Application number: 91108013.3
(22) Date of filing: 17.05.1991
(51) Int. Cl.: B60S 9/02

(54) **Supporting device for a vehicle adaptable to a stationary wagon**
Vorrichtung zum Unterstützen eines Fahrzeugs, anzupassen an einen feststehenden Wagen
Dispositif d'appui pour un véhicule adaptable dans une voiture en stationnement

(30) Priority: 18.05.1990 DK 1232/90
(43) Date of publication of application: 21.11.1991
(73) Proprietor: Soerensen, Mogens, DK-9380 Vestbjerg (DK)
(72) Inventor: Soerensen, Mogens, DK-9380 Vestbjerg (DK)
(74) Representative: Nielsen, Leif

(56) References cited:
- FR-A- 2 608 538
- GB-A- 2 084 095
- US-A- 3 933 372
- US-A- 4 146 250
- US-A- 4 515 394

## Description

The present invention relates to a supporting device for a vehicle adaptable to a stationary wagon, e.g. a caravan or a wagon and comprising at least one supporting leg which is pivotally arranged in relation to the vehicle, a mechanism for adjusting the angle position of the leg and a transverse stay which at its lower end is pivotally connected to the supporting leg or its baseplate, the transverse stay extending in a plane substantially perpendicular to the plane in which the supporting leg of the supporting device extends.

FR patent publication No. 2,608,538 discloses a device of the above-mentioned type. This device is intended for being mounted underneath a vehicle for supporting said vehicle. The device comprises two identical legs, each leg at its upper end being displacably and pivotally suspended in a spindle in two U-formed profiles, and which at their lower end are pivotally connected to a baseplate. The two legs and the baseplate can be swung upwards and downwards, respectively by means of the spindle mechanisms.

In using the above-mentioned device for supporting a caravan or the like a support is obtained which is very unstable to actions applied to the sides of the vehicle in the horizontal direction. This causes the vehicle to tend to rock when a person ascends the caravan, moves about in the caravan, or when a person or the wind tugs at the sides of the caravan. The prior art device is arranged in such a manner that both of the upper ends of the legs will be located approximately vertically above the baseplate. Thus support is obtained against actions in the vertical direction, but only a poor support is obtained against actions in the horizontal direction. Therefore, the caravan tends to be unstable. Other drawbacks to be mentioned in the above device are that it is constructed in a relatively complicated way with many expensive construction elements. Furthermore, the device has to be manufactured as one unit which is placed on the caravan or the like during manufacture of same.

It is the object of the present invention to provide an inexpensive and simple supporting device of the above-mentioned type and in which the above problems and drawbacks are avoided, and which provides a stable support by means of inexpensive and simple construction elements which render both manufacturing, assembling and maintenance easy and inexpensive. Furthermore, it is the object to provide a device consisting of separate elements which makes it easy to convert existing supporting devices thereto.

This object is achieved with a supporting device of the type mentioned in the introductory part and being characterized in that at its upper end the transverse stay is telescopic, and that the transverse stay is pivotally connected to the bottom of the vehicle by means of a bearing which is firmly positioned in relation to the vehicle.

The present invention provides a supporting device which may be arranged substantially at the very side and end edges of the vehicle, approximately at the corners of the vehicle. Thus, by placing a supporting device according to the invention at each corner of the vehicle, a support of the vehicle is achieved which is very stable to actions in all directions. Moreover, the device is constructed from few and simple elements which makes the device inexpensive to manufacture, assemble and maintain.

When arranging e.g. a caravan the upper end of the transverse stay will always remain in the same position on the vehicle, i.e. in a substantial distance from the baseplate of the supporting leg during the down swing of the supporting leg of the supporting device, This is achieved due to the telescopic construction of the transverse stay as well as its firm positioning in relation to the bottom of the vehicle and its pivotal connection in relation to the baseplate of the supporting leg. When the vehicle is in its horizontal position and the supporting leg is pivoted sufficiently down towards the base, the transverse stay of the telescopic device is locked in a fixed supporting position by means of a locking mechanism. When the supporting leg is to be swung up, the mechanism is released and subsequently the supporting leg and thereby the transverse stay can be swung up by means of the spindle mechanism.

According to one embodiment of the device of the invention the supporting device comprises two pivotal legs which are pivotally connected to each other. Furthermore, the mechanism for adjusting the angle position of the pivotal legs is preferably a single spindle mechanism, but other devices may also be used, e.g. a hydraulic piston/cylinder device.

As the transverse stay has to be longitudinally adjustable, a preferred embodiment thereof is a hollow pipe, a telescopic pipe for engagement in the hollow pipe and a locking mechanism for locking the position of the telescopic pipe in the hollow pipe.

The invention will now be explained in further detail with reference to the accompanying drawings wherein
- Fig. 1: is a diagrammatic view of a supporting device according to the invention,
- Fig. 2: is a side view of a preferred embodiment of the device according to the invention,
- Fig. 3: is a front view of the preferred embodiment of the invention, and
- Fig. 4: is a view of a further embodiment of the device according to the invention.

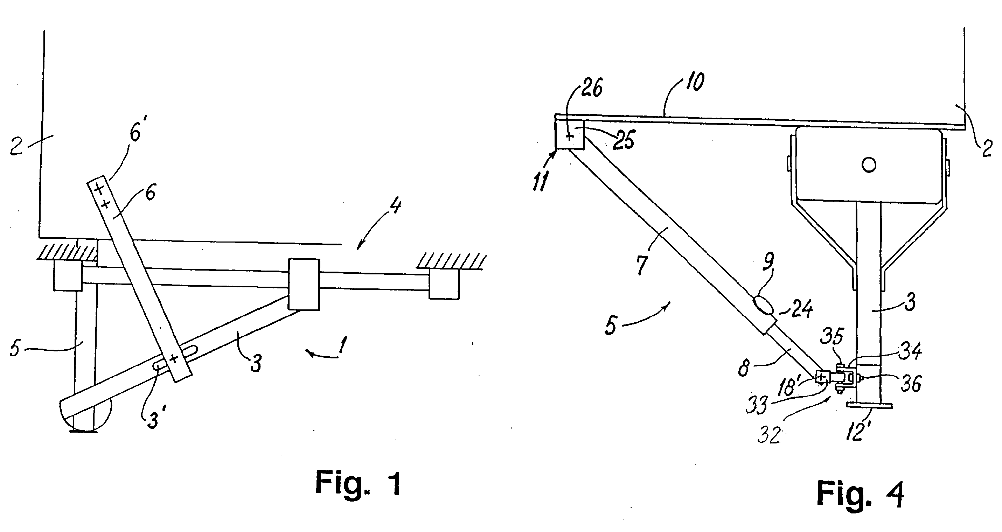

In Fig. 1 a diagrammatic view is shown of the supporting device 1 according to the invention intended for being firmly mounted to the bottom of the vehicle 2.

The supporting device 1 comprises a pivotal supporting leg 3 which at its one end is pivotally mounted to an adjusting mechanism 4. A carrier leg 6 supports the supporting leg 3 is supported in an oblong hole or a slot 3′ arranged between the ends of the supporting leg 3, which carrier leg 6 is firmly connected to the vehicle, e.g. by means of a couple of bolts/nuts connections 6′. A telescopic transverse stay 5 which will be further explained below is pivotally connected to the supporting leg 3 at its lower end.

In operating the supporting device 1, the adjusting mechanism 4 is driven in such a manner that the supporting leg 3 turns at a sliding movementabout its fastening point on the free end of the carrier leg 6. Thus the lower end of the supporting leg will turn upwards and downwards, respectively depending on the direction in which the adjusting mechanism 4 is driven. The transverse stay 5 follows the movements of the supporting leg 3. During such movements the distance betweeen fastening points of the transverse stay changes and consequently the length of the transverse stay is adjustable which will be explained in the following.

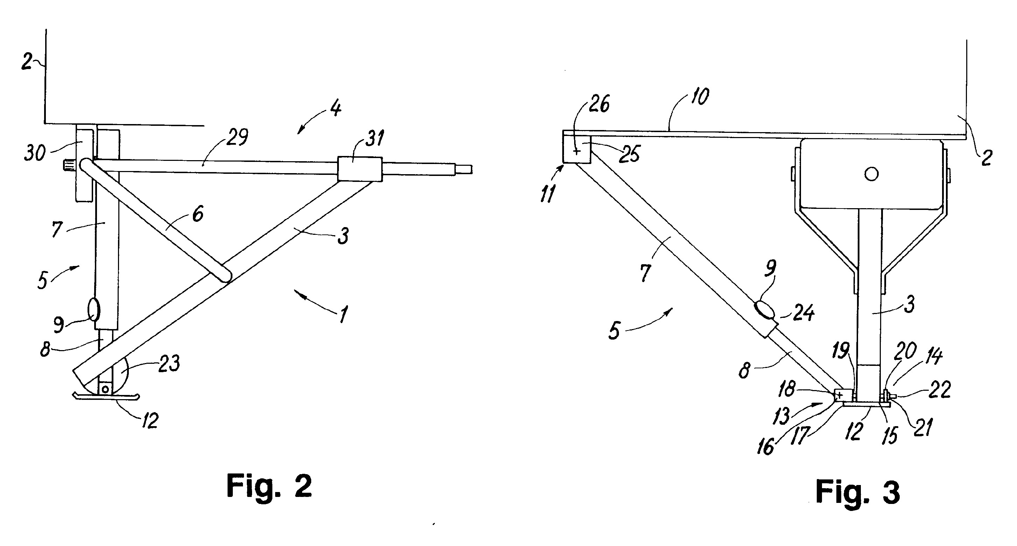

Figs. 2 and 3 illustrate a preferred embodiment of a supporting device 1 according to the invention. According to this embodiment the supporting device 1 comprises two pivotal legs 3,6 constituted by the supporting leg 3 and the carrier leg 6, respectively and which in this specific embodiment are pivotally mounted to a fixed construction element on the vehicle 2, in this case a spindle holder 30. The adjusting mechanism comprises a spindle mechanism 4 which besides a spindle 29 is constituted by a spindle holder 30 and a spindle slide 31.

When rotating the spindle 29, the spindle slide 31 moves along the spindle towards or away from the spindle holder 30, thereby causing the legs 3,6 to pivot towards the ground or away from the ground, respectively. In a particularly preferred embodiment, the dimensions and the fastening points of the two legs are arranged so that the lower end or the supporting point of the leg 3 will follow a substantially straight line extending vertically substantially perpendicular to the bottom of the vehicle. Thus it is ensured that the supporting point of the supporting leg 3 does not slide in relation to the ground.

Fig. 3 shows the transverse stay 5 comprising a hollow pipe 7, a telescopic pipe 8, and a locking mechanism 9. The pipes 7 and 8 are constituted by square pipes. The telescopic pipe 8 is displacably mounted in the hollow pipe 7 thus enabling an adjustment of the length of the transverse stay when swinging the leg upwards and downwards. During the down swing of the supporting leg 3 the telescopic pipe 8 will be displaced out of the pipe 7. When the supporting leg is arranged in the desired position in contact with the ground the telescopic pipe 8 is locked in the pipe 7 by means of the locking mechanism 9 which comprises a screw which preferable is provided with a handle in one end and passed through a threaded hole 24 arranged at the corner of the hollow pipe 7.

Furthermore, the supporting device comprises a fixing element 10 provided with a bearing 11 for pivotal fastening of the hollow pipe 7 at the bottom of the vehicle. The fixing element 10 may comprise any elements suitable for the purpose, but it is preferably constituted by a flat rod provided with holes for mounting of bolts for the fastening of the rod to the vehicle and a flange 25 projecting substantially perpendicular from one side of the rod and which is provided with a hole 26 for the engagement of a bolt which constitutes the bearing of the hollow pipe 7.

The supporting device comprises a baseplate 12 provided with at least one bearing 13 for pivotal fastening of the telescopic pipe 8. Furthermore, the baseplate 12 may comprise a connector 14 for fastening the supporting leg 3. In the embodiment shown in Fig. 3 the baseplate comprises a substantially rectangular plate 15 which at its top side at one end 17 is provided with two protruding flanges which together with the baseplate form a U-shaped fork bracket 16 extending in the same plane as the transverse stay. Each of the flanges of the U comprises a hole 18 (only one hole is illustrated in the drawing) for the fastening of the telescopic pipe 8. Furthermore, at its top side at the other end, the baseplate comprises a U-shaped fork bracket 20 consisting of two flanges each flange having a hole 19,21, for mounting of the ends of the connector 14. The bracket 20 extends in the same plane as the supporting leg 3.

According to this embodiment the connector 14 comprises a screw 22 which is put through the holes 19,21 in the U-shaped fork bracket 20 and an eye 23 in the supporting leg via a baseplate 12 has to be fixed upon fastening the transverse stays to to the supporting leg 3. The screw is maintained by means of nuts.

Fig. 4 shows an embodiment comprising a transverse stay as illustrated in Fig. 3. The fastening of the device to the bottom of the vehicle is also provided by elements identical to those illustrated in Fig. 3.

According to this embodiment, the baseplate 12′ is firmly mounted to the supporting leg 3 of the vehicle. The telescopic pipe 8 is fastened to the supporting leg 3 by means of a universal joint 32. This universal joint consists of an element 33 which at its one end comprises a U-shaped fork provided with a hole in each prong. At the other end the element 33 is provided with a through-going hole which is perpendicular to the holes through the prongs. The element 33 comprises a bolt 18′ going through the holes in the fork in the element 33 and through an eye in the telescopic pipe 8. Furthermore, the universal joint consists of a U-shaped fork 34 provided with a hole in each prong. The fork 34 is pivotally fastened to the side of the supporting leg 3 by means of a bolt 36 going through a hole at the bottom of the fork 34 and an eye in the supporting leg. Furthermore, the universal joint comprises a bolt 35 for pivotal fastening of the element 33 to the fork 34. The universal joint may optionally be constituted by a cup-shaped ball bearing.

## Claims

1. A supporting device (1) for a vehicle (2) adaptable to a stationary wagon, e.g. a caravan or a wagon and comprising at least one supporting leg (3) which is pivotally arranged in relation to the vehicle, a mechanism (4) for adjusting the angle position of the leg (3) and a transverse stay (5) which at its lower end is pivotally connected to the supporting leg (3) or its baseplate (12), the transverse stay (5) extending in a plane substantially perpendicular to the plane in which the supporting leg (3) of the supporting device extends, **characterized** in that at its upper end the transverse stay (5) is telescopic, and that the transverse stay (5) is pivotally connected to the bottom of the vehicle (2) by means of a bearing (11) which is firmly positioned in relation to the vehicle.

2. A supporting device according to claim 1, **characterized** in that it comprises two pivotal legs (3,6) which are pivitally connected to each other and that the mechanism (4) for adjusting the angle position of the legs is a single spindle mechanism.

3. A supporting device according to claims 1 and 2, **characterized** in that the transverse stay (5) comprises a hollow pipe (7), a telescopic pipe (8) mounted in the hollow pipe and a locking mechanism (9) for locking the position of the telescopic pipe in the hollow pipe.

4. A supporting device according to any of the claims 1-3, **characterized** in that the transverse stay (5) comprises a fastening element (10) having a bearing (11) for pivotal fastening of the hollow pipe (7) to the bottom of the vehicle (2) and a baseplate (12) having at least one bearing (13) for pivotal fastening of the telescopic pipe (8) thereto and that the baseplate (12) comprises a connector (14) for fastening to the supporting leg (3).

5. A supporting device according to claim 4, **characterized** in that the fastening element (10) comprises a substantially flat rod provided with holes for mounting of bolts for the fastening of the rod to the vehicle and a flange (25) protruding substantially perpendicular from one side of the rod and being provided with a hole (26) for mounting of a bolt constituting the bearing for the hollow pipe (7).

6. A supporting device according to claim 4, **characterized** in that the baseplate (12) comprises a substantially plane rectangular plate (15) comprising at its top side at one end (17) two protruding flanges which together with the baseplate form a U-shaped fork bracket extending in the same plane as the transverse stay and comprising a hole (18) in each flange of the U for use in fastening the telescopic pipe (8), which plate (15) comprises a U-shaped fork bracket (20) at its top side at the other end which bracket (20) is formed by two flanges each having a hole (19,21) for mounting of the ends of the connector (14) and extending in the same plane as the supporting leg (3).

7. A supporting device according to claim 4, **characterized** in that the connector comprises a bolt which may be put through at least two holes in the baseplate and an eye in the supporting leg.

8. A supporting device according to claim 3, **characterized** in that the locking mechanism comprises a bolt provided with a handle led in a thread (24) formed in the hollow pipe and which may be tightened against the telescopic pipe which thereby maintains its position in the hollow pipe.

9. A supporting device according to claim 8, **characterized** in that the hollow pipe and the telescopic pipe are contituted by a square pipe and that the thread (24) of the screw provided with a handle is positioned in a corner of the hollow pipe (7) so that the bolt is orientated diagonally.

10. A supporting device according to any of the claims 1-4, **characterized** in that the baseplate (12) is firmly, but pivotally mounted to the supporting leg (3), and that the connector between the transverse stay (5) and the supporting leg (3) comprises a universal joint, e.g. a ball joint, cardan joint or a corresponding joint permitting a mutual turn of the transverse stay (5) and the supporting leg (3) to an optional spatial angle.

## Patentansprüche

1. Stützvorrichtung (1) für ein Fahrzeug (2), anpaßbar an einen stehenden Wagen, z. B. einen Wohnwagen oder einen Waggon, mit zumindest einem in bezug zu dem Fahrzeug gelenkig angeordneten Stützbein (3), einem Mechanismus (4) zum Einstellen der Winkelposition des Beines (3) und einem Querträger (5), der an seinem unteren Ende gelenkig mit dem Stützbein (3) oder dessen Grundplatte (12) verbunden ist, wobei sich der Querträger (5) in einer Ebene erstreckt, die im wesentlichen senkrecht zu der Ebene verläuft, in der sich das Stützbein (3) der Stützvorrichtung erstreckt, dadurch **gekennzeichnet**, daß der Querträger (5) an seinem oberen Ende ausziehbar ist und daß der Querträger (5) mit dem Boden des Fahrzeugs (2) mit Hilfe eines Lagers (11) gelenkig verbunden ist, welches in bezug zu dem Fahrzeug fest angeordnet ist.

2. Stützvorrichtung nach Anspruch 1, dadurch **gekennzeichnet**, daß sie zwei Schwenkbeine (3, 6) aufweist, die gelenkig miteinander verbunden sind, und daß der Mechanismus (4) zum Einstellen der Winkelposition der Beine ein Einfach-Spindelmechanismus ist.

3. Stützvorrichtung nach Anspruch 1 oder 2, dadurch **gekennzeichnet**, daß der Querträger (5) ein Hohlrohr (7), ein in dem Hohlrohr angebrachtes Teleskoprohr (8) und einen Feststellmechanismus (9) zum Feststellen der Position des Teleskoprohres in dem Hohlrohr umfaßt.

4. Stützvorrichtung nach einem der Ansprüche 1 bis 3, dadurch **gekennzeichnet**, daß der Querträger (5) ein Befestigungselement (10) mit einem Lager (11) zur gelenkigen Befestigung des Hohlrohres (7) an dem Boden des Fahrzeuges (2) und eine Grundplatte (12) mit zumindest einem Lager (13) zum gelenkigen Befestigen des Teleskoprohres (8) daran umfaßt und daß die Grundplatte (12) eine Verbindungseinrichtung (14) zum Befestigen an dem Stützbein (3) aufweist.

5. Stützvorrichtung nach Anspruch 4, dadurch **gekennzeichnet**, daß das Befestigungselement (10) einen im wesentlichen flachen Stab mit Löchern zum Anbringen von Bolzen zur Befestigung des Stabes an dem Fahrzeug und einen Flansch (25) umfaßt, der im wesentlichen senkrecht von einer Seite des Stabes hervorsteht und mit einem Loch (26) zum Anbringen eines das Lager für das Hohlrohr (7) bildenden Bolzens versehen ist.

6. Stützvorrichtung nach Anspruch 4, dadurch **gekennzeichnet**, daß die Grundplatte (12) eine im wesentlichen flache rechteckige Platte (15) mit zwei hervorstehenden Flanschen an ihrer Oberseite an einem Ende (17) umfaßt, die zusammen mit der Grundplatte ein U-förmiges Gabellager bilden, das sich in der gleichen Ebene wie der Querträger erstreckt und in jedem Flansch des U ein Loch (18) zur Verwendung beim Befestigen des Teleskoprohres (8) aufweist, wobei die Platte (15) an ihrer Oberseite am anderen Ende ein U-förmiges Gabellager (20) aufweist, wobei das Gabellager (20) durch zwei Flansche mit je einem Loch (19, 21) zum Anbringen der Enden der Verbindungseinrichtung (14) gebildet ist und sich in derselben Ebene wie das Stützbein (3) erstreckt.

7. Stützvorrichtung nach Anspruch 4, dadurch **gekennzeichnet**, daß die Verbindungseinrichtung einen Bolzen aufweist, der durch zumindest zwei Löcher in der Grundplatte und ein Auge in dem Stützbein gesteckt werden kann.

8. Stützvorrichtung nach Anspruch 3, dadurch **gekennzeichnet**, daß der Feststellmechanismus einen mit einem Griff versehenen, in einem in dem Hohlrohr ausgebildeten Gewindegang (24) geführten Bolzen umfaßt, der gegen das Teleskoprohr angezogen werden kann, das dadurch seine Position in dem Hohlrohr behält.

9. Stützvorrichtung nach Anspruch 8, dadurch **gekennzeichnet**, daß das Hohlrohr und das Teleskoprohr Vierkantrohre sind und daß der Gewindegang (24) der mit einem Griff versehenen Schraube in einer Ecke des Hohlrohres (7) angeordnet ist, so daß der Bolzen diagonal ausgerichtet ist.

10. Stützvorrichtung nach einem der Ansprüche 1 bis 4, dadurch **gekennzeichnet**, daß die Grundplatte (12) fest, aber gelenkig an dem Stützbein (3) angebracht ist und daß die Verbindungseinrichtung zwischen dem Querträger (5) und dem Stützbein (3) ein Universalgelenk, z. B. ein Kugelgelenk, ein Kardangelenk oder ein entsprechendes Gelenk aufweist, das ein gegenseitiges Verdrehen des Querträgers (5) und des Stützbeins (3) in einen beliebigen Raumwinkel gestattet.

## Revendications

1. Dispositif de support (1) pour un véhicule (2) pouvant être utilisé comme remorque stationnaire, par exemple une caravane ou un chariot, et comportant au moins une seule béquille de support (3) disposée de façon à pouvoir pivoter par rapport au véhicule, un mécanisme (4) pour le réglage de la position angulaire de la béquille (3) ainsi qu'une traverse (5) reliée, à son extrémité inférieure, de façon à pouvoir pivoter à la béquille de support (3) ou à sa plaque base (12) et s'étendant dans un plan approximativement perpendiculaire au plan dans lequel s'étend la béquille de support (3) du dispositif de support, **caractérisé** en ce qu'à son extrémité supérieure, la traverse (5) est télescopique, et en ce que la traverse (5) est reliée de façon à pouvoir pivoter au fond du véhicule (2) à l'aide d'un palier (11) à position fixe par rapport au véhicule.

2. Dispositif de support selon la revendication 1, **caractérisé** en ce qu'il comporte deux béquilles pivotantes (3,6) reliées entre elles de façon à pouvoir pivoter, et en ce que le mécanisme (4) pour le réglage de la position angulaire des béquilles est un mécanisme à broche simple.

3. Dispositif de support selon les revendications 1 et 2, **caractérisé** en ce que la traverse (5) comporte un tuyau creux (7), un tuyau télescopique (8) monté dans le tuyau creux et un mécanisme de blocage (9) pour le blocage de la position du tuyau télescopique dans le tuyau creux.

4. Dispositif de support selon n'importe quelle des revendications 1-3, **caractérisé** en ce que la traverse (5) comporte un élément de fixation (10) muni d'un palier (11) pour la fixation pivotante du tuyau creux (7) au fond du véhicule (2) et une plaque base (12) munie d'au moins un seul palier (13) pour la fixation pivotante du tuyau télescopique (8), et en ce que la plaque base (12) comporte un raccord (14) pour la fixation à la béquille de support (3).

5. Dispositif de support selon la revendication 4, **caractérisé** en ce que l'élément de fixation (10) comporte une barre approximativement plate munie de trous pour le montage de boulons pour la fixation de la barre au véhicule et une bride (25) qui saille approximativemnet perpendiculairement sur l'un des côtés de la barre, et qui est munie d'un trou (26) pour le montage d'un boulon qui constitue le palier pour le tuyau creux (7).

6. Dispositif de support selon la revendication 4, **caractérisé** en ce que la plaque base (12) se compose d'une plaque rectangulaire approximativement plane (15) comportant à sa face supérieure, à l'une de ses extrémités (17) deux brides saillantes formant avec la plaque base une console à fourche en U s'étendant dans le même plan que la traverse et comportant un trou (18) dans chaque bride de l'U pour la fixation du tuyau télescopique (8), laquelle plaque (15) comporte à sa face supérieure, à son autre extrémité, une console à fourche en U (20) formée par deux brides chacune munie d'un trou (19,21) pour le montage des extrémités du raccord (14) et s'étendant dans le même plan que la béquille de support (3).

7. Dispositif de support selon la revendication 4, **caractérisé** en ce que le raccord comporte un boulon pouvant être passé par au moins deux trous dans la plaque base ainsi qu'un oeil dans la béquille de support.

8. Dispositif de support selon la revendication 3, **caractérisé** en ce que le mécanisme de blocage comporte un boulon muni d'une poignée mené dans un filetage (24) formé dans le tuyau creux et qui peut être serré contre le tuyau télescopique pour maintenir sa position dans le tuyau creux.

9. Dispositif de support selon la revendication 8, **caractérisé** en ce que le tuyau creux et le tuyau télescopique se composent de tuyaux carrés, et en ce que le filetage (24) pour le boulon muni d'une poignée est placé dans un coin du tuyau creux (7) de sorte que le boulon est disposé diagonalement.

10. Dispositif de support selon n'importe quelle des revendications 1-4, **caractérisé** en ce que la plaque base (12) est monté d'une façon fixe, mais pivotante sur la béquille de support (3), et en ce que le raccord entre la traverse (5) et la béquille de support (3) comporte un palier universel, par ex. un palier à billes, un joint de Cardan ou un palier correspondant permettant la rotation mutuelle de la traverse (5) et de la béquille de support (3) pour former un angle spatial arbitraire.
